# EUROPEAN PATENT APPLICATION

(11) **EP 4 852 454 A1**
(43) Date of publication of application: **09.12.2026**
(21) Application number: 26180768.9
(22) Date of filing: 22.05.2026
(51) Int. Cl.: H04R 9/02, H04R 9/06, H04R 3/00, H04R 29/00

(54) **SPEAKER AND METHOD FOR PRODUCING SPEAKER**

(30) Priority: 04.06.2025 JP 2025066392
(71) Applicant: Alps Alpine Co., Ltd., Tokyo 145-8501 (JP)
(72) Inventor: Uesugi, Haruki, Tokyo, 145-8501 (JP)
(74) Representative: Schmitt-Nilson Schraud Waibel Wohlfrom Patentanwälte Partnerschaft mbB

(57) **Abstract**

A speaker is provided and includes a magnetic circuit including a first magnet configured to drive the speaker and a top plate disposed on the first magnet; a second magnet disposed on the top plate; a vibrator including a diaphragm configured to be driven by the magnetic circuit; and a magnetic angle sensor attached to the vibrator. The magnetic angle sensor is configured to, in an XY plane orthogonal to a Z direction in which the vibrator vibrates, detect an angle of a magnetic flux obtained by combining a first magnetic flux from the first magnet, and a second magnetic flux from the second magnet and having a direction different from a direction of the first magnetic flux.

## Description

The present disclosure relates to a speaker configured to detect the movement of a vibrator including a diaphragm with high accuracy using a magnetic sensor.

A speaker configured to perform feedback control by detecting the moving state of a vibrator including a diaphragm using a magnetic sensor (see, for example, JP2022-149259A and JP2022-178131A) is disclosed. The magnetic sensor (e.g., a GMR sensor, which stands for a giant magneto resistance sensor) is configured to detect the angle of a magnetic flux. The magnetic sensor enables detection of displacement of the vibrator with high accuracy based on a change in the angle of a magnetic flux vector obtained by combining a magnetic flux from a fixed magnet forming a magnetic circuit and a magnetic flux from a movable magnet attached to the vibrator.

The present disclosure relates to a speaker and method for producing a speaker according to the appended claims. Embodiments are disclosed in the dependent claims.

A speaker according to an aspect of the present disclosure includes: a magnetic circuit including a first magnet configured to drive the speaker and a top plate disposed on the first magnet; a second magnet disposed on the top plate; a vibrator including a diaphragm configured to be driven by the magnetic circuit; and a magnetic angle sensor attached to the vibrator. The magnetic angle sensor is configured to, in an XY plane orthogonal to a Z direction in which the vibrator vibrates, detect an angle of a magnetic flux obtained by combining a first magnetic flux from the first magnet, and a second magnetic flux from the second magnet and having a direction different from a direction of the first magnetic flux.

A method for producing a speaker according to a further aspect of the present disclosure includes: attaching, to a frame, a magnetic circuit including an unmagnetized first magnet and a top plate to which an unmagnetized second magnet is attached; simultaneously magnetizing the first magnet and the second magnet in the same direction; and after the magnetization, attaching, to the frame, a vibrator including a magnetic angle sensor.
FIG. 1 is a diagram schematically illustrating a positional relationship between a GMR sensor and first and second magnets.
FIG. 2 is a diagram illustrating the principle of displacement detection of a vibrator using the GMR sensor.
FIG. 3 is a schematic cross-sectional diagram of a conventional speaker.
FIG. 4 is a perspective diagram including a cross section in a Z direction of a speaker according to an embodiment of the present disclosure.
FIG. 5A is an overall perspective diagram illustrating a speaker of an embodiment in which a diaphragm is removed.
FIG. 5B is an enlarged perspective diagram of a region including a bobbin and a top plate in FIG. 5A.
FIG. 6A is a perspective diagram schematically illustrating a magnetic field (or a magnetic field line) applied to the GMR sensor.
FIG. 6B is a plan diagram schematically illustrating the magnetic field applied to the GMR sensor when viewed from directly above (XY plane).
FIG. 7 is a diagram illustrating the principle of displacement detection of a diaphragm using a GMR sensor of the present embodiments.
FIG. 8 is a graph illustrating a simulation result of a displacement versus a magnetic angle (displacement-magnetic angle) obtained using a displacement detector of the present embodiments.

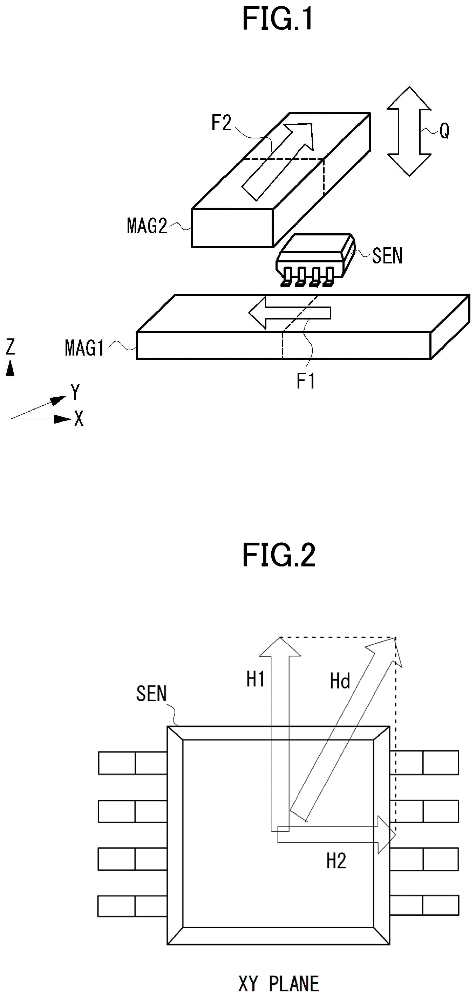

FIG. 1 is a diagram schematically illustrating a positional relationship between a GMR sensor and fixed/movable magnets, which are disposed in a conventional speaker. As illustrated in FIG. 1, the positions of a first magnet MAG1, forming a magnetic circuit, and a GMR sensor SEN are respectively fixed, and a second magnet MAG2 attached to a vibrator is movable to move in accordance with an amplitude Q of the vibrator. Also, the two magnets are disposed such that the direction of a magnetic field F1 of the first magnet MAG1 applied to the GMR sensor SEN is substantially orthogonal to the direction of a magnetic field F2 of the second magnet MAG2.

FIG. 2 is a diagram illustrating the principle of displacement detection of a vibrator using the GMR sensor. The GMR sensor SEN utilizes a GMR effect in which a resistance value changes by the effect of an external magnetic field. The GMR sensor SEN is bias-driven, for example, by a DC voltage or a DC current. When the resistance value is changed by the GMR effect caused by the external magnetic field, the GMR sensor SEN outputs a voltage or a current in accordance with the resistance change. As illustrated in FIG. 2, the GMR sensor SEN detects the angle of a resultant vector magnetic flux Hd obtained by combining a magnetic flux vector H1 from the first magnet MAG1 and a magnetic flux vector H2 from the second magnet MAG2 in an XY plane, which is a detection surface. Since the relative distance between the GMR sensor SEN and the first magnet MAG1 does not change, the magnetic flux vector H1 does not substantially change. Whereas, since the relative distance between the second magnet MAG2 and the GMR sensor SEN changes in accordance with the amplitude Q of the vibrator, the magnetic flux vector H2 changes accordingly. When the second magnet MAG2 approaches the GMR sensor SEN, the magnetic flux vector H2 increases, and when the second magnet MAG2 moves away from the GMR sensor SEN, the magnetic flux vector H2 decreases. This causes a change in the angle of the resultant vector Hd. The angle change of the resultant vector Hd corresponds to the displacement of the amplitude Q of the vibrator.

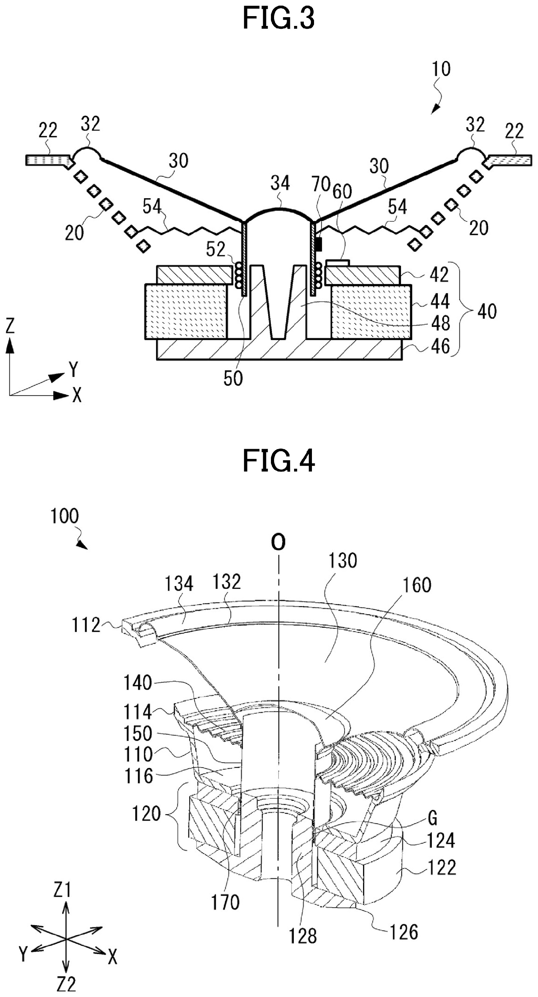

FIG. 3 is a schematic cross-sectional diagram of a conventional speaker using the GMR sensor. A speaker 10 includes a frame 20, a diaphragm 30, and a magnetic circuit 40. The diaphragm 30 is attached to one end 22 of the frame 20 via a hemispherical edge 32, and a dome-shaped center cap 34 is attached to the center of the diaphragm 30. The magnetic circuit 40 includes a ring-shaped top plate 42, a ring-shaped first magnet 44, a disk-shaped bottom plate 46, a center pole 48 projecting upward from the center of the bottom plate 46, a cylindrical bobbin 50 disposed outside the center pole 46, and a voice coil 52 wound around a peripheral portion of the bobbin 50. The bobbin 50 is connected to an intermediate portion of the frame 20 via a damper 54, and the upper end of the bobbin 50 is adhesively fixed to the rear surface of the diaphragm 30.

The GMR sensor 60 is fixed to the surface of the top plate 42 in the XY plane, and a second magnet 70 is fixed above the bobbin 50 in a magnetic gap. The magnetic field F1 in a radial direction of the top plate 42 generated by the first magnet 44 and the magnetic field F2 in a tangential direction of the bobbin 50 generated by the second magnet 70 are applied to the GMR sensor 60.

An assembly step of such a conventional speaker structure, in which the GMR sensor 60 and the second magnet 70 are disposed, is as follows. The first magnet 44 is magnetized before assembly of a vibrating system, followed by attaching the GMR sensor 60 and then the second magnet 70, which is previously magnetized and produced in a different step. In such an assembly step, the second magnet 70 needs to be previously magnetized in the different step. In addition, the magnetized second magnet 70 is not readily handled, resulting in reduced productivity. Further, the second magnet 70 dedicated to displacement detection of the vibrator is required, resulting in increased cost of a speaker.

It is an object of the present disclosure to provide a speaker and a method for producing the speaker that can address such problems and increase production efficiency.

A speaker according to an embodiment of the present disclosure has a function to monitor behaviors of a diaphragm in real time using a magnetic sensor. A magnetic angle sensor is attached to a vibrator, and the first and second magnets can be magnetized simultaneously, thereby increasing production efficiency of an assembly step of the speaker. The drawings referred to in the description of the following embodiments include exaggerated representations for facilitating understanding of the present disclosure, and do not express the shapes or scales of an actual product.

Next, embodiments of the present disclosure will be described in detail with reference to the drawings. FIG. 4 is a perspective diagram including a cross section in a Z direction of a speaker to which embodiments of the present disclosure are applicable. In FIG. 4, a Z1-to-Z2 direction is a front-rear direction of a speaker 100, a Z1 direction is a front side (front surface), and a Z2 direction is a rear side. Also, FIG. 4 illustrates a center axis O extending in the front-rear direction (Z1-to-Z2 direction). A main portion of the speaker 100 has a structure that is substantially rotationally symmetric about the center axis O.

The speaker 100 includes a frame 110 formed of a non-magnetic material or a magnetic material. The frame 110 has a tapered shape with a diameter gradually increasing toward the front side, and a magnetic circuit 120 is fixed to the rear side of the frame 110 by means of adhesion, screwing, or the like.

The magnetic circuit 120 includes a first magnet 122 configured to drive the speaker and having a shape of a ring centered on the center axis O, a ring-shaped top plate (opposing yoke) 124 bonded to the front side of the first magnet 122, a back plate (rear yoke) 126 bonded to the rear side of the first magnet 122, and a center pole (center yoke) 128 positioned inside the first magnet 122 and the top plate 124 and extending toward the front side from the back plate 126. The top plate 124, the back plate 126, and the center pole 128 are formed of a magnetic material.

The center pole 128 has a cylindrical shape. A magnetic gap G is formed along a circumference centered on the center axis O between the outer peripheral surface of the center pole 128 and the inner peripheral surface of the top plate 124. In the magnetic circuit 120, a driving magnetic field generated by the first magnet 122 crosses the magnetic gap G from the top plate 124, and flows through the center pole 128 and the back plate 126.

A cone-shaped diaphragm 130 is provided inside a front-side portion of the frame 110. A front-end peripheral portion 112 of the frame 110 and an outer peripheral end 132 of the diaphragm 130 are bonded via an elastically deformable edge 134. The edge 134 and the front-end peripheral portion 112 are adhesively fixed to each other, and the edge 134 and the outer peripheral end 132 are adhesively fixed to each other. An inner peripheral fixing portion 114 is formed on the inner surface of an intermediate portion of the frame 110. An end of an elastically deformable damper 140 having a corrugated cross section is adhesively fixed to the inner peripheral fixing portion 114. The magnetic circuit 120 is attached to a rear end 116 of the frame 110.

A bobbin 150 is provided inside the frame 110. The bobbin 150 has a cylindrical shape centered on the center axis O. The inner peripheral end of the diaphragm 130 is adhesively fixed to the outer peripheral surface of the bobbin 150, and the end of the damper 140 is adhesively fixed to the outer peripheral surface of the bobbin 150. A dome-shaped cap 160 is provided at the center of the diaphragm 130. The cap 160 covers a front-side opening of the bobbin 150. The peripheral portion of the cap 160 is adhesively fixed to the front surface of the diaphragm 130. A voice coil 170 is wound around the outer peripheral surface of the rear end of the bobbin 150. The voice coil 170 is located within the magnetic gap G of the magnetic circuit 120. The diaphragm 130 and the bobbin 150 are supported to be vibratable in the front-rear direction through elastic deformation of the edge 134 and the damper 140.

Further, the speaker 100 is provided with a displacement detector configured to detect the displacement of the diaphragm 130. The displacement detector of the present embodiment includes a GMR sensor 210 attached to the bobbin 150, and a second magnet disposed on the top plate 124. The GMR sensor is configured to detect the angle of a magnetic flux vector obtained by combining the magnetic flux generated from the second magnet and the magnetic flux generated from the first magnet 122 of the magnetic circuit 120. The angle displacement of the combined magnetic flux corresponds to the displacement of the diaphragm.

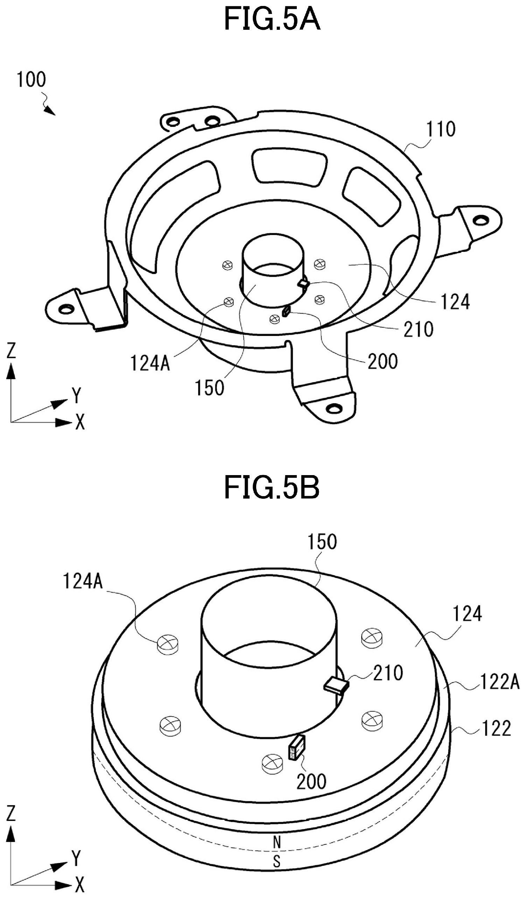

FIG. 5A is an overall perspective diagram illustrating a speaker of an embodiment in which the diaphragm is removed. FIG. 5B is an enlarged perspective diagram of a region including a bobbin and a top plate in FIG. 5A. The first magnet 122 forming the magnetic circuit 120 is magnetized in the Z direction. For example, the upper portion of the first magnet 122 is magnetized to the N pole, and the lower portion of the first magnet 122 is magnetized to the S pole. The ring-shaped top plate 124 covering the upper surface of the first magnet 122 is fixed to the end of the frame 110 by screws 124A. The top plate 124 provides a path for effectively guiding the magnetic flux, generated by the first magnet 122, to the center pole 128. The top plate 124 need not necessarily cover the entire surface of the first magnet 122, and may be smaller than the outer diameter of the first magnet 122. In this case, an outer peripheral surface 122A of the first magnet 122 is exposed without being covered by the top plate 124.

A second magnet 200 is attached to the surface of the top plate 124. The shape, size, and attachment method of the second magnet 200 are as desired. For example, the rectangular second magnet 200 is attached to the surface of the top plate 124 with an adhesive or the like. The second magnet 200 is magnetized in the Z direction, i.e., the magnetization direction of the second magnet 200 is the same as that of the first magnet 122. The attachment position and the attachment direction of the second magnet 200 are adjusted such that an external magnetic field passes in a Y-axis direction of the XY plane, which is the detection surface of a GMR sensor 210.

The GMR sensor 210, serving as the magnetic angle sensor, is attached to the outer peripheral portion of the bobbin 150. The attachment method of the GMR sensor 210 is as desired. For example, the GMR sensor 210 is attached to the outer peripheral portion of the bobbin 150 with an adhesive or the like. In one embodiment, the GMR sensor 210 may be attached to the bobbin 150 via a printed circuit board (not shown), and an electronic component configured to process a detection signal of the GMR sensor 210 may be mounted on the printed circuit board.

The attachment position and the attachment direction of the GMR sensor 210 are adjusted such that the detection surface of the GMR sensor 210 configured to detect the magnetic angle is aligned with the XY plane and such that the magnetic flux from the first magnet 122 passes in an X-axis direction. Thus, the GMR sensor 210 detects the angle of a resultant composite magnetic flux vector of the magnetic flux from the second magnet 200 applied in the Y-axis direction and the magnetic flux from the first magnet 122 applied in the X-axis direction.

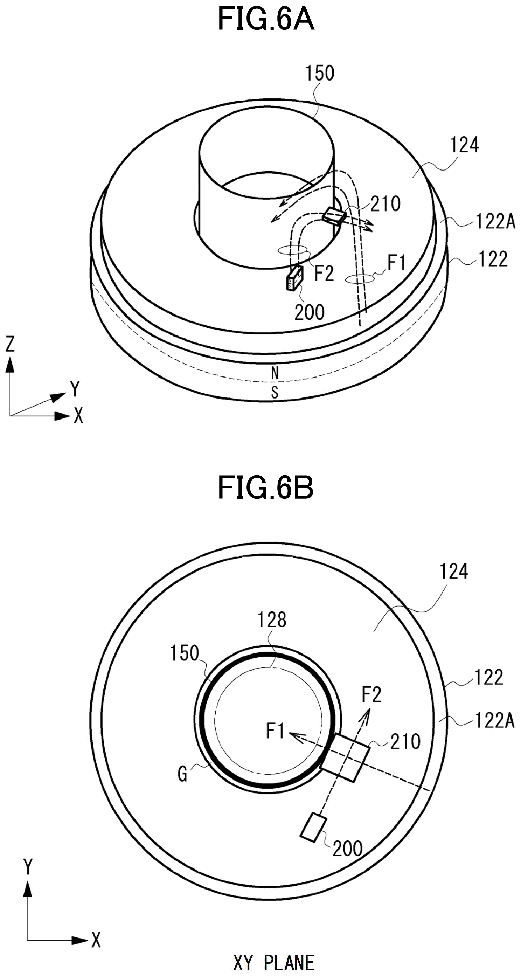

FIG. 6A is a perspective diagram schematically illustrating a magnetic field (or a magnetic field line) applied to the GMR sensor 210. FIG. 6B is a plan diagram schematically illustrating the magnetic field applied to the GMR sensor 210 when viewed from directly above (XY plane).

A magnetic flux flowing through the magnetic circuit 120 is in a closed loop. That is, the magnetic flux generated from the N pole of the first magnet 122 flows through the top plate 124, which is a yoke in the magnetic circuit 120, crosses the magnetic gap G and passes through the center pole 128 and the back plate 126, which are yokes, and flows to the S pole of the first magnet 122, which is an end point. In practice, however, a part of the magnetic flux leaks to the outside because of the magnetic permeability of the yoke, the magnitude of the magnetic force, structural reasons, or the like.

FIGS. 6A and 6B illustrate, as a typical example, a magnetic field (or a magnetic field line) F1, which is the magnetic flux leakage generated from the outer peripheral surface 122A of the first magnet 122, exposed from the top plate 124, to the center plate 128 through the surface of the top plate 124. The magnetic flux leakage generated from the first magnet 122 can be generated from the surface of the center plate 128 or the side surface of the first magnet 122, in addition to the path of the magnetic field F1. The position of the GMR sensor 210 is adjusted such that the magnetic field F1 from the first magnet 122 is applied in the X-axis direction of the GMR sensor 210.

Also, the magnetization direction of the second magnet 200 is the same as that of the first magnet 122. Thus, the magnetic field F2 generated from the second magnet 200 to the outside advances in a curved manner starting from the upper N pole, and flows to the lower S pole through the top plate 124. The positions of the first magnet 200 and/or the GMR sensor 210 are adjusted such that the magnetic field F2 from the second magnet 200 is applied in the Y-axis direction of the GMR sensor 210. Although FIG. 6B illustrates an example in which the magnetic field F1 and the magnetic field F2 are orthogonal to each other on the detection surface (XY plane) of the GMR sensor 210, the magnetic field F1 and the magnetic field F2 need not necessarily be orthogonal to each other as long as the direction of the magnetic field F1 and the direction of the magnetic field F2 are different from each other.

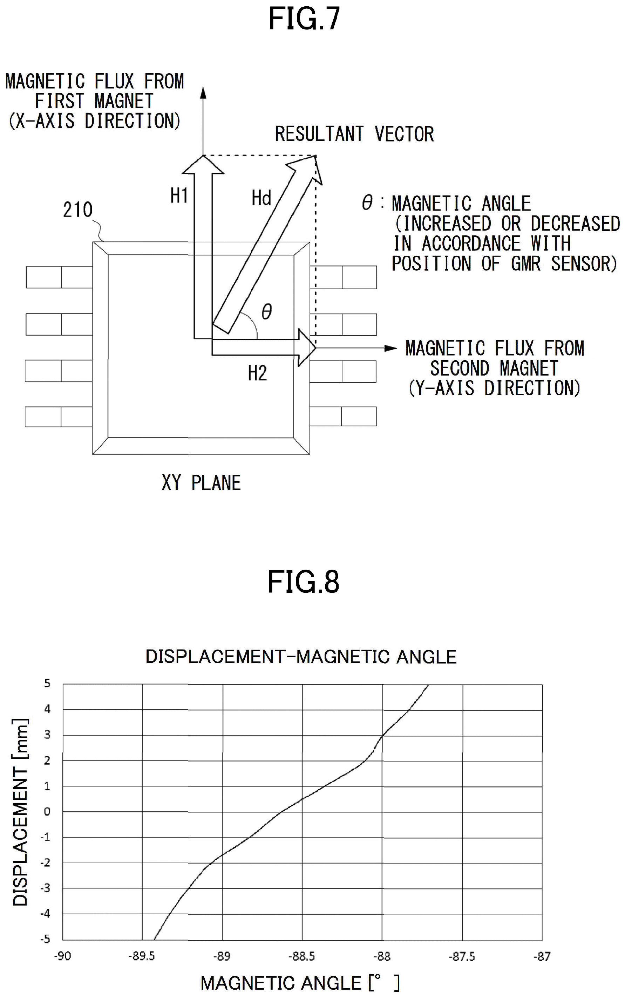

FIG. 7 is a diagram illustrating the principle of displacement detection of a GMR sensor of the present embodiments. The GMR sensor 210 detects, on the XY plane, i.e., the detection surface, a magnetic angle θ of the resultant vector magnetic flux Hd obtained by combining the magnetic flux vector H1 from the first magnet 122 and the magnetic flux vector H2 from the second magnet 200.

When an audio signal is applied to the voice coil 170 to vibrate the diaphragm 130, the GMR sensor 210 disposed on the bobbin 150 vibrates along with the diaphragm 130, thereby changing the relative position between the GMR sensor 210 and the first and second magnets 122 and 200 in synchronization with the vibration. The change in the relative position changes the magnitudes and directions of the magnetic flux vectors H1 and H2 passing through the GMR sensor 210. Therefore, the magnetic angle θ of the resultant vector Hd changes. This change in the magnetic angle θ corresponds to the displacement of the diaphragm.

FIG. 8 is a graph illustrating a simulation result of a displacement-magnetic angle obtained using the displacement detector of the present embodiments. In FIG. 8, the vertical axis indicates the displacement [mm] of the GMR sensor, and the horizontal axis indicates the magnetic angle [°]. As a condition for the simulation, as illustrated in FIG. 6B, the second magnet 200 is not disposed on a line connecting the center of the bobbin 150 and the center of the GMR sensor 210. In other words, the second magnet 200 and the GMR sensor 210 are disposed such that the direction of the magnetic field F1 from the first magnet 122 and the direction of the magnetic field F2 from the second magnet 200 are different from each other on the detection surface (XY plane) of the GMR sensor 210. As is clear from the graph of FIG. 8, when the amplitude of the GMR sensor 210 is in the range of -5 mm to +5 mm, the magnetic angle θ changes in the range of -89.4° to -87.7°. This indicates that the relationship between the displacement and the magnetic angle is unambiguously determined.

Next, a method for producing a speaker of the present embodiments will be described. First, the magnetic circuit 120 including the top plate 124, to which the unmagnetized second magnet 200 is attached, the unmagnetized first magnet 122, the bottom plate 126, and the center pole 128 is attached to one end of the frame 110. Next, the first magnet 122 and the second magnet 200 are simultaneously magnetized in the same direction, i.e., the Z direction. Next, the bobbin 150 to which the GMR sensor 210 is attached, and the vibrator including the diaphragm 130 are attached to the other end of the frame 110.

In this manner, according to the present embodiments, by attaching the GMR sensor 210 to the bobbin 150, the first magnet 122 and the second magnet 200 can be magnetized simultaneously, thereby increasing productivity in the assembly step of the speaker. Further, by disposing the second magnet 200 on the top plate 124, it is possible to ensure a fixed amount of magnetism applied to the GMR sensor 210, and to widen the range of detectable displacement.

In the above embodiments, the GMR sensor is attached to the outer peripheral portion of the bobbin. However, the GMR sensor may be attached to the vibrator rather than the bobbin if the magnetic flux vector from the first magnet and the magnetic flux vector from the second magnet can be detected. In the above embodiment, the GMR sensor is exemplified as the magnetic sensor configured to detect the magnetic angle. Instead, a TMR sensor can be used.

Although embodiments of the present disclosure have been described in detail, the present disclosure is not limited to the specific embodiments, and various modifications may be possible within the scope of the claims.

According to the present disclosure, by disposing the second magnet for displacement detection of the vibrator on the top plate and attaching the magnetic angle sensor to the vibrator, it is possible to simultaneously magnetize both the first magnet and the second magnet in the same direction after the first magnet and the second magnet are disposed, thereby increasing productivity of the speaker. Further, by disposing the second magnet on the top plate, it is possible to suppress reduction in the amount of magnetism applied to the magnetic angle sensor, and to widen the range of displacement detectable by the magnetic angle sensor.

## Claims

1. A speaker, comprising:
a magnetic circuit including a first magnet configured to drive the speaker and a top plate disposed on the first magnet;
a second magnet disposed on the top plate;
a vibrator including a diaphragm configured to be driven by the magnetic circuit; and
a magnetic angle sensor attached to the vibrator, wherein
the magnetic angle sensor is configured to, in an XY plane orthogonal to a Z direction in which the vibrator vibrates, detect an angle of a magnetic flux obtained by combining a first magnetic flux from the first magnet, and a second magnetic flux from the second magnet and having a direction different from a direction of the first magnetic flux.

2. The speaker according to claim 1, wherein
the vibrator includes a bobbin, and
the magnetic angle sensor is attached to the bobbin.

3. The speaker according to claim 2, wherein
the second magnet is attached at a position away from a line connecting a center of the bobbin and a center of the magnetic angle sensor.

4. The speaker according to one of claims 1 to 3, wherein
each of the first magnet and the second magnet is magnetized in the Z direction.

5. A method for producing a speaker, the method comprising:
attaching, to a frame, a magnetic circuit including an unmagnetized first magnet and a top plate to which an unmagnetized second magnet is attached;
simultaneously magnetizing the first magnet and the second magnet in a same direction; and
after the magnetization, attaching, to the frame, a vibrator including a magnetic angle sensor.

6. The method according to claim 5, wherein
the magnetic angle sensor is attached to a bobbin of the vibrator such that, in an XY plane orthogonal to a Z direction in which the vibrator vibrates, the magnetic angle sensor detects an angle of a magnetic flux obtained by combining a first magnetic flux from the first magnet, and a second magnetic flux from the second magnet and having a direction different from a direction of the first magnetic flux.
